# FASCICULE DE BREVET EUROPEEN

(11) **EP 2 271 589 B1**
(45) Date de publication et mention de la délivrance du brevet: **19.09.2012**
(21) Numéro de dépôt: 09735340.3
(22) Date de dépôt: 24.04.2009
(51) Int. Cl.: C02F 1/44, C02F 1/00, C02F 9/00

(54) **PROCEDE DE TRAITEMENT DE REJETS DE STATION MEMBRANAIRE**
VERFAHREN ZUR BEARBEITUNG VON ABFALL AUS EINER MEMBRANFILTERUNGSANLAGE
PROCESS FOR TREATING WASTE FROM A MEMBRANE FILTRATION PLANT

(30) Priorité: 24.04.2008 FR 0852769
(43) Date de publication de la demande: 12.01.2011
(73) Titulaire: Veolia Water Solutions & Technologies Support, 94417 Saint-Maurice Cedex (FR)
(72) Inventeur: DAINES-MARTINEZ, Catherine, F-78570 Andresy (FR); SCHROTTER, Jean-Christophe, F-78600 Maisons-laffitte (FR); DROUET, Karine, F-78260 Acheres (FR); GAID, Abdelkader, F-75014 Paris (FR)
(74) Mandataire: Larcher, Dominique
(86) Numéro de dépôt international: PCT/EP2009/055004
(87) Numéro de publication internationale: WO 2009/130324

(56) Documents cités:
- US-B1- 6 872 312

## Description

Le domaine de l'invention est celui du traitement des eaux. Plus précisément, l'invention concerne les procédés de traitement d'eaux comprenant au moins une étape de filtration membranaire.

L'invention s'applique en particulier, mais non exclusivement, aux traitements d'eaux destinées à subir un traitement membranaire d'osmose inverse ou de nanofiltration.

L'invention s'applique de préférence aux procédés de potabilisation d'eau.

Les eaux de consommation humaine sont classiquement soumises à un traitement de filtration sur membranes de nanofiltration ou osmose inverse pour en diminuer la teneur en pesticides et autres micro-polluants organiques qui peuvent être enlevés par procédés membranaires.

La nanofiltration permet également d'enlever les anions bivalents, tels que les sulfates, mais aussi de réduire la teneur en d'autres sels, tels que des nitrates par exemple.

L'osmose inverse utilise des membranes similaires à celles de nanofiltration mais disposant d'un pouvoir de séparation supérieur. Elle permet d'enlever à peu près tous les polluants organiques et minéraux de l'eau. L'osmose inverse est notamment utilisée pour la production d'eau de consommation humaine.

En outre, il est classique de faire subir aux eaux un prétraitement en amont des traitements membranaires d'osmose inverse et de nanofiltration, ce prétraitement consistant en une séparation liquide-solide à basse vitesse (par exemple décantation simple ou lamellaire et/ou filtration directe bi-couche, et/ou flottation).

Un traitement de coagulation-floculation est également fréquemment réalisé.

Un inconvénient des techniques de filtration membranaire est de produire des rejets appelés « concentrats » représentant 10 % à 60% du débit initial, et qui sont dans la plupart des cas, chargés en phosphonates.

Ces phosphonates proviennent des séquestrants injectés en amont des membranes. Ces séquestrants ont pour but d'éviter la précipitation des sels sur les membranes. Ils sont totalement arrêtés par celles-ci se retrouvant ainsi concentrés environ 2 à 7 fois dans les rejets membranaires.

Or, les autorités tendent à limiter voir à interdire les rejets de phosphonates en rivière ou en mer. Ce problème apparaît notamment pour les rejets d'unités de production d'eaux potables, qui sont susceptibles pour une partie, d'arriver dans les eaux de rivière ou en mer.

Il est donc nécessaire de proposer une technique pour éviter de tels rejets.

Ceci est un objectif de l'invention.

Plus précisément, l'invention a pour objectif de proposer une technique pour l'élimination d'espèces indésirables dans les rejets de filtration telles que des phosphonates, appliquée à un traitement d'eau comprenant une étape de prétraitement et de filtration membranaire.

L'invention a également pour objectif de proposer une telle technique qui permette de diminuer les coûts d'exploitation comparés aux procédés de l'art antérieur.

L'invention a aussi pour objectif de fournir une telle technique qui offre des voies de valorisation optimisées pour les boues en excès.

Un autre objectif de l'invention est de fournir une telle technique qui soit simple de conception et facile à mettre en oeuvre.

L'invention permet aussi de traiter les rejets afin de les valoriser en les utilisant pour le nettoyage d'ouvrages industriels comme par exemple les filtres à sable.

Ces objectifs, ainsi que d'autres qui apparaîtront par la suite, sont atteints grâce à l'invention qui a pour objet un procédé de traitement d'eaux, comprenant une première étape de prétraitement produisant une eau prétraitée et des boues, ladite eau prétraitée subissant ensuite au moins une étape de filtration membranaire produisant des rejets et un perméat, ledit perméat étant acheminé vers une filière de potabilisation
caractérisé en ce que ladite première étape de prétraitement comprend une première étape de coagulation-flocculation, et en ce que lesdits rejets issus de ladite étape de filtration membranaire subissent une phase de traitement incluant au moins une deuxième étape de coagulation-floculation suivie d'une étape de décantation produisant des boues, ladite étape de décantation étant précédée d'au moins une étape d'adsorption sur au moins une partie desdites boues issues du prétraitement et/ou sur une partie desdites boues provenant de ladite étape de décantation, ladite étape d'adsorption visant un abattement des phosphonates contenus dans lesdits rejets issus de ladite étape de filtration membranaire, ledit procédé conduisant à des rejets traités et à des boues en excès.

On notera que ladite première étape de prétraitement produisant une eau prétraitée et des boues inclura préférentiellement une étape de décantation dite primaire et/ou une étape de filtration sur un filtre intégrant un média filtrant ou sur membranes de microfiltration ou d'ultrafiltration (MF/UF), les boues étant dans ces deux derniers cas produites par les rétro lavages du filtre ou des membranes de microfiltration ou d'ultrafiltration (MF/UF) .

Comme indiqué précédemment, les phosphonates proviennent des séquestrants injectés en amont des membranes, concentrées environ 2 à 7 fois sur celles-ci.

Or, les séquestrants étant des chélatants, ils s'adsorbent facilement sur des argiles, des calcites ou des hydroxydes de métaux, ces derniers composés étant classiquement présents dans les boues de décantation. Ces hydroxydes proviennent des coagulants à base de fer ou d'aluminium utilisés lors de l'étape de coagulation.

La capacité d'adsorption des boues est donc utilisée pour éliminer les phosphonates des concentrats de filtration membranaires.

De plus, le procédé selon l'invention permet une réduction des dosages de coagulant, et donc une réduction des coûts d'exploitation correspondants.

En effet, dans le cas d'une coagulation-floculation classique des concentrats, les dosages d'agent coagulant sont deux à trois fois plus élevés que dans le cas du procédé selon l'invention. Ceci s'explique par le fait qu'une partie des phosphonates est adsorbée sur les boues comme indiqué ci-dessus. Le résiduel à éliminer implique donc une plus faible consommation en agent coagulant.

On note que l'utilisation des boues pour l'étape d'adsorption n'engendre pas de surcoûts importants, ces boues étant des sous-produits du procédé selon l'invention. Recycler ces boues est donc peu onéreux.

Préférentiellement, l'agent coagulant est un sel de fer ou d'aluminium et lesdites boues sont des boues d'hydroxydes de fer et/ou d'aluminium

Selon une autre caractéristique, ladite deuxième étape de coagulation-floculation est réalisée au moins en deux phases successives, la première sous agitation rapide et la deuxième sous agitation lente.

Selon un mode de réalisation préféré, lesdites étapes d'adsorption et de décantation sont réalisées dans le même ouvrage, à savoir un décanteur, préférentiellement de 3 minutes à 90 minutes et de façon préférée entre toutes, pendant environ 15 minutes, ladite étape d'adsorption étant réalisée si nécessaire sous agitation.

Selon encore une autre caractéristique, le procédé comprend une étape de valorisation des boues en excès en épandage agricole.

Dans ce cas, le procédé comprend au moins une étape de concentration desdites boues en excès.

De cette façon, on augmente la concentration des boues en phosphore, ce qui améliore leur capacité à fertiliser les sols en épandage. Le fait d'enrichir ainsi les boues en phosphore est un atout pour leur valorisation agricole, la concentration des boues en phosphore permettant une meilleure fertilisation des sols en épandage. De plus, les boues en excès obtenus grâce au procédé selon l'invention sont riches en phosphonates. Or, le phosphore sous forme phosphonate est moins accessible aux plantes que le phosphore sous forme phosphate. Sa dégradation en phosphore sera donc plus lente, donc plus bénéfique pour le sol.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation synoptique d'un procédé de traitement d'eau selon l'invention ;
- la figure 2 est un graphe d'abattement en phosphore dans des concentrats membranaires à différentes doses de boues.

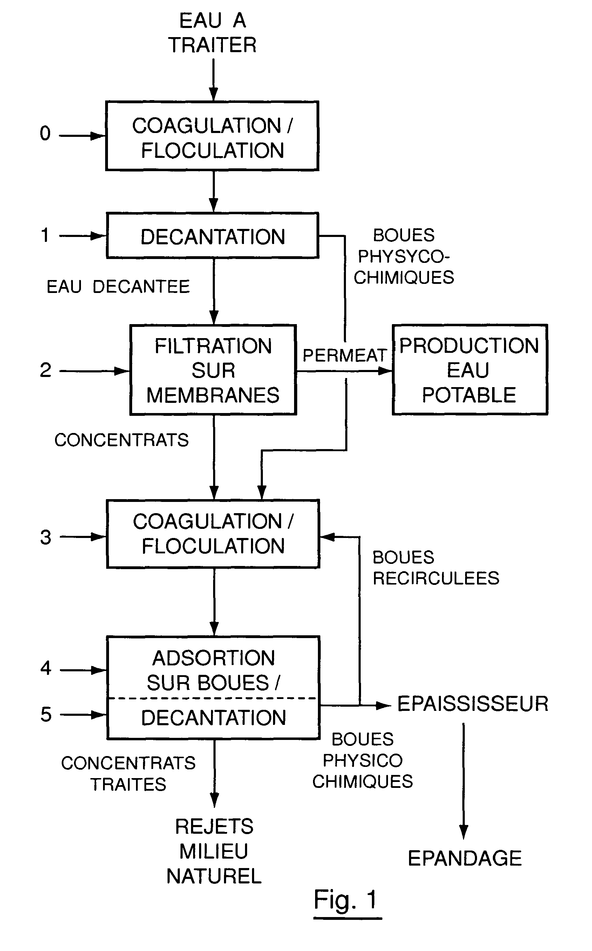

En référence à la figure 1, l'exemple concerne un procédé de traitement d'eau en vue de sa potabilisation qui comprend, selon l'invention, une étape de prétraitement et au moins une étape de filtration membranaire, une étape d'élimination des phosphonates présents dans les concentrats de filtration membranaire par adsorption sur les boues provenant du pré-traitement.

Tel qu'illustré sur la figure 1, l'eau à traiter subit une étape 1 de décantation primaire précédée d'une première étape de coagulation /floculation à l'issue de laquelle on obtient une eau décantée et des boues physico-chimiques.

L'eau décantée subit ensuite une étape 2 de filtration membranaire, par nanofiltration ou osmose inverse, à l'issue de laquelle le perméat obtenu est acheminé vers une unité de production d'eau potable.

Selon l'invention, les concentrats du traitement membranaire subissent ensuite une phase de traitement incluant une deuxième étape 3 de coagulation/floculation et une étape 5 de décantation dite secondaire, à l'issue de laquelle on obtient un concentrat traité et des boues de décantation.

Selon l'invention, une étape d'adsorption 4 des phosphonates est intercalée entre la deuxième étape 3 de coagulation floculation et l'étape 5 de décantation.

Cette étape d'adsorption est réalisée durant 10 minutes, sous agitation, avec une vitesse d'agitation de 60 tr/min, sur les boues issues de l'étape 1 de décantation primaire et sur une partie des boues issues de l'étape 5 de décantation secondaire, les boues en excès provenant de cette étape étant épaissies puis valoriser par épandage agricole.

La deuxième étape 3 de coagulation/floculation se décompose en deux phases : une première phase sous agitation rapide à 250 tr/mn puis une deuxième phase sous agitation lente à 60 tr/mn.

Le coagulant est de type minéral, préférentiellement du FeCl₃, dont la concentration variera entre 1 et 200 mg/l.

Le floculant est du type 4190 SH Floerger (marque déposée), d'une concentration entre 0,05 et 1 ppm.

La durée des étapes 1, 5 de décantation est pour chacune de 15 minutes.

Pour illustrer l'efficacité du procédé, des boues de décantation primaire provenant d'une station d'eau potable et présentant différentes concentrations en matières en suspensions (MES) ont été mises en contact avec les concentrats de l'unité de filtration membranaire de ladite station d'eau potable, après avoir fait subir à ces concentrats une deuxième étape de coagulation/floculation.

En pratique, les boues testées présentaient une concentration en MES comprise entre 126 mg/l et 394 mg/l.

Le taux d'élimination des phosphonates de ces concentrats a été évalué en suivant l'abattement en phosphore total (Pₜₒₜₐₗ) dans les concentrats traités.

Les résultats obtenus ont été comparés à ceux obtenus par un procédé identique mais n'incluant pas l'étape consistant, selon l'invention à mettre en contact les concentrats ayant subi une deuxième étape de coagulation/ floculation avec les boues de décantation primaire provenant de la station d'eau potable.

Pour une meilleure fiabilité des analyses, l'élimination des phosphonates a été déterminée suivant l'abattement en phosphore total (Pₜₒₜₐₗ).

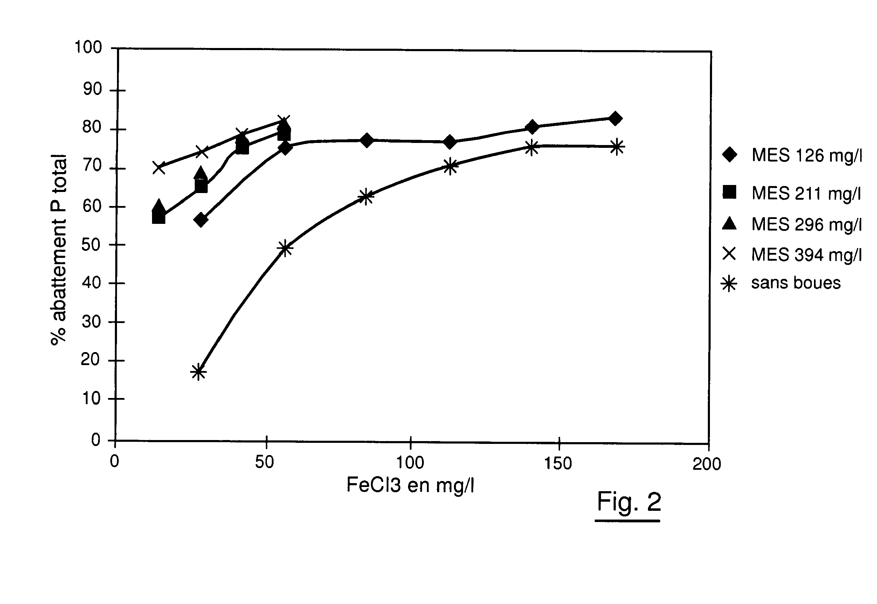

Les résultats de ces essais sont répertoriés sur le graphique de la figure 2.

On observe que, pour un même pourcentage d'abattement du phosphore total Pₜₒₜₐₗ, les doses d'agent coagulant (FeCl₃) utilisées sont plus faibles lorsqu'une étape d'adsorption est effectuée selon l'invention.

Ainsi, pour éliminer 75% du phosphore total, il est nécessaire d'utiliser 60 ppm de FeCl₃ avec des boues à 126 mg/l (MES) pour 150 ppm de FeCl₃ sans étape d'adsorption.

## Revendications

1. Procédé de traitement d'eaux, comprenant une première étape de prétraitement produisant une eau prétraitée et des boues, ladite eau prétraitée subissant ensuite au moins une étape de filtration membranaire produisant des rejets et un perméat, ledit perméat étant acheminé vers une filière de potabilisation
**caractérisé en ce que** ladite première étape de prétraitement comprend une première étape de coagulation-flocculation, et **en ce que** lesdits rejets issus de ladite étape de filtration membranaire subissent une phase de traitement incluant au moins une deuxième étape de coagulation-floculation suivie d'une étape de décantation produisant des boues, lesdites première et deuxième étapes de coagulation-flocculation mettant en oeuvre des coagulants à base de fer ou d'aluminium, ladite étape de décantation étant précédée d'au moins une étape d'adsorption sur au moins une partie desdites boues issues du prétraitement et/ou sur une partie desdites boues provenant de ladite étape de décantation, ladite étape d'adsorption visant un abattement des phosphonates contenus dans lesdits rejets issus de ladite étape de filtration membranaire, ledit procédé conduisant à des rejets traités et à des boues en excès.

2. Procédé selon la revendication 1 **caractérisé en ce que** ladite première étape de prétraitement produisant une eau prétraitée et des boues inclut une étape de décantation dite primaire et/ou une étape de filtration sur un filtre intégrant un média filtrant ou sur membranes de microfiltration ou d'ultrafiltration (MF/UF), les bouse étant dans ces deux derniers cas produites par les rétro lavages du filtre ou des membranes de microfiltration ou d'ultrafiltration (MF/UF).

3. Procédé de traitement d'eaux selon la revendication 1 ou 2 **caractérisé en ce que** ladite étape d'adsorption est réalisée sous agitation.

4. Procédé selon l'une quelconque des revendications précédentes **caractérisé en ce que** lesdites étapes d'adsorption et de décantation sont réalisées dans le même ouvrage préférentiellement pendant une durée de 3 minutes à 90 minutes et de façon préférée entre toutes, pendant environ 15 minutes, ladite étape d'adsorption étant réalisée si nécessaire sous agitation.

5. Procédé selon l'une quelconque des revendications précédentes **caractérisé en ce que** ladite deuxième étape de coagulation-floculation est réalisée au moins en deux phases successives, la première sous agitation rapide et la deuxième sous agitation lente.

6. Procédé selon l'une quelconque des revendications précédentes **caractérisé en ce que** ladite étape de filtration appartient au groupe suivant : filtration par osmose inverse nanofiltration.

7. Procédé selon l'une quelconque des revendications précédentes **caractérisé en ce qu'**il comprend une étape de valorisation des boues en excès en épandage agricole.

8. Procédé selon la revendication 7, **caractérisé en ce qu'**il comprend au moins une étape de concentration desdites boues en excès lorsque celles-ci sont saturées en phosphore.

## Claims

1. A water treatment process comprising a first pretreatment step producing pretreated water and sludge, said pretreated water then being subjected to at least one membrane filtration step producing waste and a permeate, said permeate being routed to a water purification system,
**characterised in that** said first pretreatment step comprises a first coagulation-flocculation step, and **in that** said waste from said membrane filtration step undergoes a treatment phase including at least one second coagulation-flocculation step followed by a sedimentation step producing sludge, said first and second coagulation-flocculation steps using coagulants based on iron or aluminium, said sedimentation step being preceded by at least one step of adsorption on at least a portion of said sludge resulting from the pretreatment and/or on a portion of said sludge coming from said sedimentation step, said adsorption step being intended to reduce the phosphonates contained in said waste resulting from said membrane filtration step, said process leading to treated waste and excess sludge.

2. The process according to claim 1, **characterised in that** said first pretreatment step producing pretreated water and sludge includes a so-called primary sedimentation step and/or filtration step on a filter incorporating a filtration medium or on microfiltration or ultrafiltration (MF/UF) membranes, the sludge being produced in the latter two cases by back-washings of the filter or of the microfiltration or ultrafiltration (MF/UF) membranes.

3. The water treatment process according to claim 1 or 2, **characterised in that** said adsorption step is performed under agitation.

4. The process according to any one of the preceding claims, **characterised in that** said adsorption and sedimentation steps are performed in the same structure, preferably for a period of 3 minutes to 90 minutes and, most preferably, for about 15 minutes, said adsorption step being performed under agitation if necessary.

5. The process according to any one of the preceding claims, **characterised in that** said second coagulation-flocculation step is performed in at least two successive phases, the first under rapid agitation and the second under slow agitation.

6. The process according to any one of the preceding claims, **characterised in that** said filtration step belongs to the following group: reverse osmosis filtration, nanofiltration.

7. The process according to any one of the preceding claims, **characterised in that** it includes a step of utilising the excess sludge in agricultural spreading.

8. The process according to claim 7, **characterised in that** it includes at least one step of concentrating said excess sludge when this is saturated with phosphorus.

## Patentansprüche

1. Wasseraufbereitungsverfahren, das eine erste Vorbehandlungsstufe umfasst, die vorbehandeltes Wasser und Schlämme hervorbringt, wobei das vorbehandelte Wasser anschließend mindestens einer Membranfiltrationsstufe unterzogen wird, die Abflüsse und ein Permeat hervorbringt, wobei das Permeat zu einer Trinkbarmachungs-Linie weitergeleitet wird,
**dadurch gekennzeichnet, dass** die erste Vorbehandlungsstufe eine erste Koagulations-/Ausflockungsstufe umfasst und dass die von der Membranfiltrationsstufe stammenden Abflüsse einer Behandlungsphase unterzogen werden, die mindestens eine zweite Koagulations-/Ausflockungsstufe beinhaltet, gefolgt von einer Klärungsstufe, die Schlämme hervorbringt, wobei die erste und die zweite Koagulations-/Ausflockungsstufe Koagulanzien auf Eisen- oder Aluminiumbasis einsetzen, wobei der Klärungsstufe mindestens eine Adsorptionsstufe an mindestens einem Teil der Schlämme, die aus der Vorbehandlungsstufe stammen und/oder an einem Teil der Schlämme, die aus der Klärungsstufe hervorgehen, vorangeht, wobei die Adsorptionsstufe auf einen Abzug von Phosphonaten abzielt, die in den von der Membranfiltrationsstufe stammenden Abflüssen enthalten sind, wobei das Verfahren zu behandelten Abflüssen und Überschussschlämmen führt.

2. Verfahren nach Anspruch 1, **dadurch gekennzeichnet, dass** die erste Vorbehandlungsstufe, die vorbehandeltes Wasser und Schlämme hervorbringt, eine als Erste bezeichnete Klärungsstufe und/oder eine Filtrationsstufe über einen Filter, der ein Filtrationsmedium integriert, oder über Mikrofiltrations- oder Ultrafiltrationsmembranen (MF/UF) beinhaltet, wobei die Schlämme in diesen beiden letzteren Fällen durch die Rückspülungen des Filters oder der Mikrofiltrations- oder Ultrafiltrationsmembranen (MF/UF) erzeugt werden.

3. Wasseraufbereitungsverfahren nach Anspruch 1 oder 2, **dadurch gekennzeichnet, dass** die Adsorptionsstufe unter Rühren durchgeführt wird.

4. Verfahren nach einem der vorhergehenden Ansprüche, **dadurch gekennzeichnet, dass** die Adsorptionsstufe und die Klärungsstufe im selben Arbeitsschritt, vorzugsweise während eines Zeitraums von 3 Minuten bis 90 Minuten und vorzugsweise dazwischen während ungefähr 15 Minuten durchgeführt werden, wobei die Adsorptionsstufe unter Rühren durchgeführt wird, falls erforderlich.

5. Verfahren nach einem der vorhergehenden Ansprüche, **dadurch gekennzeichnet, dass** die zweite Koagulations-/Ausflockungsstufe mindestens in zwei aufeinander folgenden Phasen durchgeführt wird, die erste unter schnellem Rühren und die zweite unter langsamem Rühren.

6. Verfahren nach einem der vorhergehenden Ansprüche, **dadurch gekennzeichnet, dass** die Filtrationsstufe zu der folgenden Gruppe gehört: Filtration mittels Umkehrosmose, Nanofiltration.

7. Verfahren nach einem der vorhergehenden Ansprüche, **dadurch gekennzeichnet, dass** es eine Stufe zur Aufwertung von Überschussschlämmen zu landwirtschaftlichem Dünger umfasst.

8. Verfahren nach Anspruch 7, **dadurch gekennzeichnet, dass** es mindestens eine Stufe zur Konzentration von Überschussschlämmen umfasst, wenn diese mit Phosphor gesättigt sind.
